# EUROPEAN PATENT SPECIFICATION

(11) **EP 0 656 304 B1**
(45) Date of publication and mention of the grant of the patent: **05.08.1998**
(21) Application number: 94118820.3
(22) Date of filing: 30.11.1994
(51) Int. Cl.: B65G 17/12, B65G 21/22

(54) **Arrangement for transporting articles along a closed path defined by a guide**
Anlage zum Transportieren von Gegenständen längs einer durch eine Führung bestimmten geschlossenen Bahn
Installation pour transporter des articles le long d'une trajectoire fermée étant définie par un guidage

(30) Priority: 01.12.1993 IT MI932523
(43) Date of publication of application: 07.06.1995
(73) Proprietor: ALCATEL ALSTHOM COMPAGNIE GENERALE D'ELECTRICITE, 75008 Paris (FR)
(72) Inventor: Reali, Lanfranco, I-64010 Villa Lempa (TE) (IT)
(74) Representative: Pohl, Herbert, Dipl.-Ing.

(56) References cited:
- EP-A- 0 112 471
- DE-B- 1 274 993
- DE-U- 8 619 619
- DE-U- 9 106 102
- US-A- 4 310 276

## Description

The present invention relates to an arrangement for transporting articles along a closed path comprising a guide defining the path, at least one transport module movable with rolling friction on the guide and means for dragging the module along the path.

Arrangements of the above-mentioned type are employed in several fields. In the field of industrial automation, e.g., they are used as collecting/sorting systems in assembly lines, while in postal automation they are used for the sorting and forwarding of bulky letter, packages and the like.

U.S.Patent N° 4,310,276 discloses a machine for transporting objects from a leading station to a sorting station, wherein the objects are loaded on mobile carriages slidable along a monorail guide each through a pully rolling on the upper surface of the rail and a pair of rollers which slidably engage with the opposite sides of the lower portion of the guide.

This machine and other similar in the art have the drawback that along curved portions of the path sliding friction is generated between the rail and parts rolling on it which, besides reducing the speed, causes vibrations and unbalances that make the module noisy and, in addition, can cause derailment of the module with consequences easy to conceive.

Moreover, such devices are unstable in the sense that, being not constrained enough to the rail, entail limitation in speed and in the transversal inclination of the guide.

The general object of the present invention is to overcome the drawbacks of the prior art and provide an arrangement for transporting articles along a closed path defined by a guide which features low noisiness, high transportation speed, short replacement time and, moreover, is inexpensive.

Another object of the present invention is to provide a transport module for closed path defined by a guide which is stable, i.e. capable of operating with any transverse inclination of the guide without limiting the velocity of the module and, moreover, is balanced and does not cause vibrations.

These and other objects of the invention, which will become more apparent hereinafter, are achieved, in accordance with the present invention, by an arrangement for transporting articles along a closed path, of the type comprising at least one transport module movable with rolling friction along a guide defining the path, the arrangement being characterized in that the guide consists in at least two parallel tubular rails, that the module is slidably engaged with each of the rails through articulated trolleys distributed in such a way that at least one rail is engaged with at least two articulated trolleys, each trolley being rotatable about an axis perpendicular to the respective rails and abutting on it through at least two antifriction bearings tangent thereto in at least one pair of points distant 90 degrees each from the other in the plane of the rail cross-section, each trolley being articulately fixed to the structure of the module through a sintered self-lubricating bush.

Thanks to this solution the following advantages are obtained:
high speed, low central forces in curvilinear sections, absence of unbalancings, absence of vibrations, very low noisiness, low costs.

Further characteristics and advantages of the invention will result better from the detailed description of a preferred, but not exclusive, embodiment of an arrangement for transporting articles along a closed path defined by a guide, taken in conjunction with the accompanying drawings attached merely by way and not limiting example, wherein:
- Fig. 1 illustrates schematically in a perspective view the arrangement in accordance with the present invention;
- Fig. 2 shows a constrained transport module used in the arrangement of Fig. 1 along with portion of rail guide;
- Fig. 3 shows in greater detail the module of Fig. 2 in a cross-sectional view;
- Fig. 4 shows an enlarged detail of Fig. 3; and
- Fig. 5 illustrates schematically an articulated trolley mounted on the module of Figs. 2 and 3, along with the respective rail, in a cross-sectional view.

With reference to the figures, the arrangement for transporting articles along a closed path defined by a guide comprises at least a transport module 1, movable with rolling friction on the guide formed by two rails 5,6 extending along the closed path and parallelly disposed in vertical planes in the embodiment shown in the figure, but not necessarily. Each rail has a circular cross-section and is formed by a number of portions joined together.

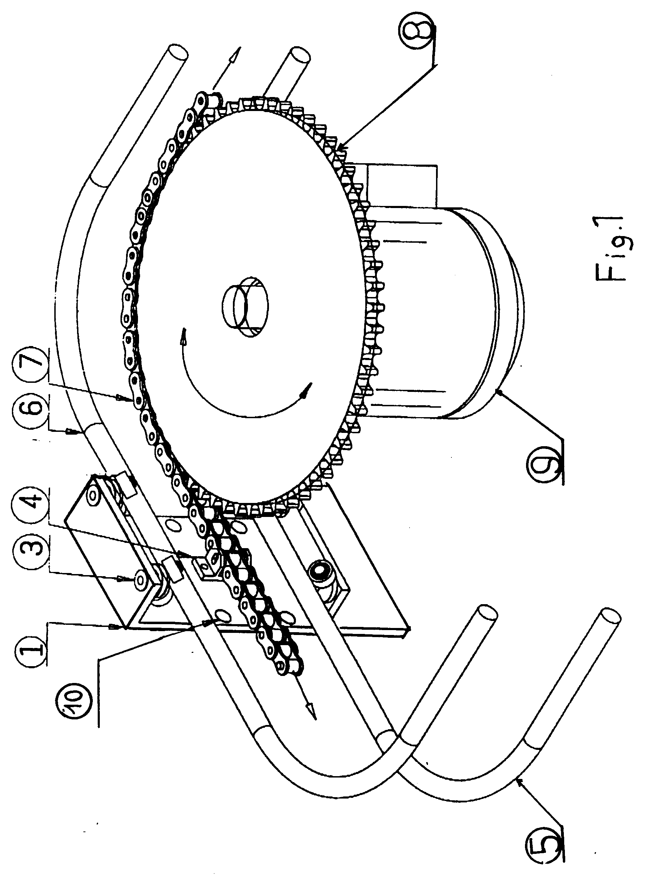

The module 1 is dragged along the path by a flexible dragging member 7 such as a chain, a belt or a rope. In the embodiment shown in Fig. 1, such member 7 is a chain driven by a motor through a sprocket wheel 8.

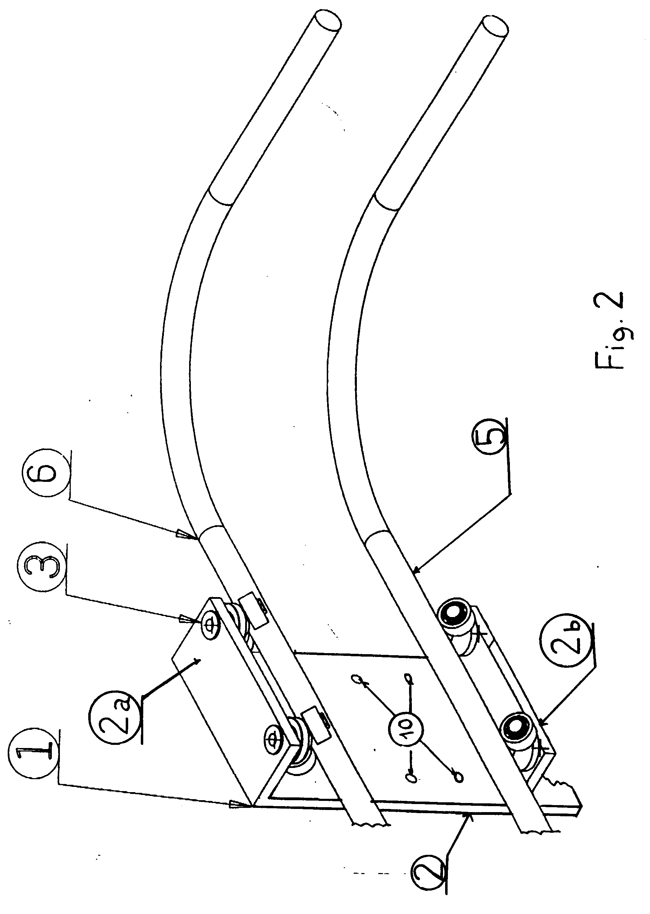

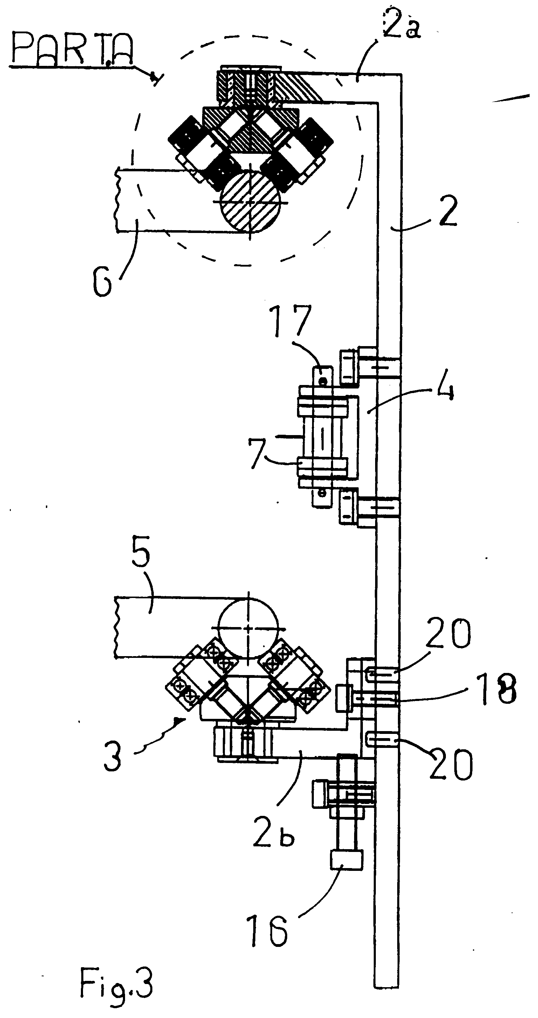

The transport module 1 comprises a C-shaped plate-like structure 2 (see Figs. 2 and 3), extending transversely of the rails 5,6 so that they run between the bent ends 2a, 2b; mounted on these bent ends are articulated trolleys 3 which extend inwards and abut on the corresponding rail 5,6 while the unbent portion 2 is provided with holes 10 for fixing the support (not shown) carrying the articles and with a pi-section bracket 4 for anchoring the chain 7.

One of the bent ends (2b in Fig. 3) consists of an unequal angle bracket, one side of which mounting the respective articulated trolley(s) 3 and the other side being adjustably fixed to structure 2 through two screws 18 (only one visible in the figure) and two guide pins 20.

A micrometer adjusting screw 16 allows the adjusting of the position of bracket 2b and therefore the optimization of the position of the respective articulated trolley(s) 3 on the respective rail 5.

In the embodiment illustrated in the figures there are represented four trolleys, two mounted on the upper bent end and two in the lower one, but their number can be changed provided that the stability of the module is assured in the sense that it is prevented from rotating both about an horizontal axis and about a vertical axis.

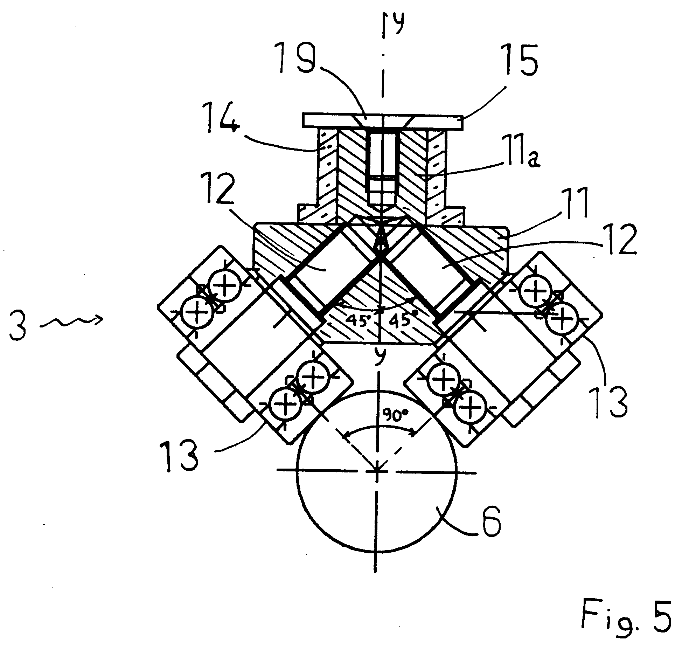

In Fig. 5 there is illustrated schematically an articulated trolley along with the respective rail (6 in Fig. 5), a respective bush 14 and a respective clamping plate 15.

Each trolley 3 is composed of a substantially cylindrical body 11 having an axis y-y perpendicular to the respective rail, mounting two ball-bearings 13 through respective bearing pins 12 each making an angle of 45 degrees with axis y-y, so that the bearings 13 touch the respective rail at two points symmetrical with respect to axis y-y and at angular distance of 90 degrees in the plane of the rail cross-section (see Fig. 5).

The upper portion of the body 11 terminates coaxially with a hub 11a surrounded by a respective sintered self-lubricating bush 14 that allows the automatic rotation of the trolley on the curved portions of the rail adapting it thereto.

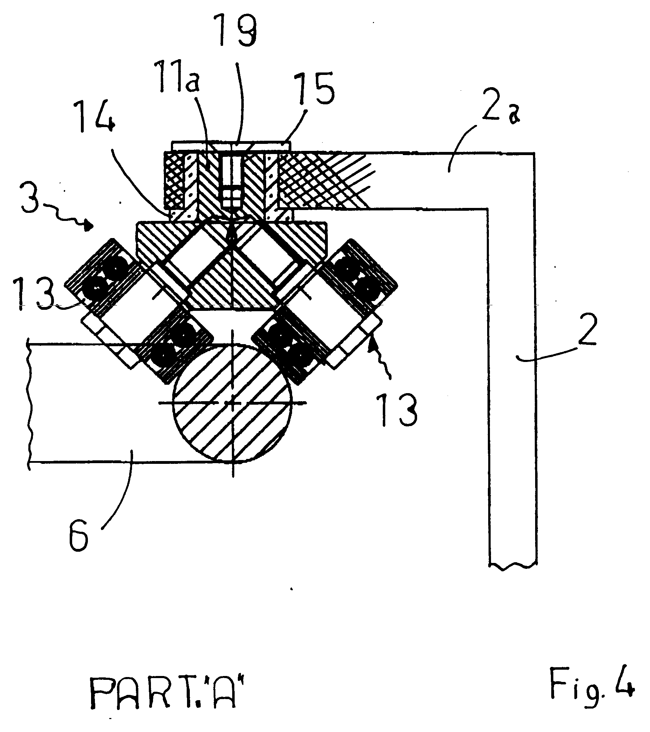

Bush 14 is fixed to the respective bent end 2a, 2b of plate 2 (see Fig. 4). The hub 11a is inserted in the respective bush and projects about 0.5 mm. above the surface of the respective bent end. A clamping plate 15 is fixed to the hub through a screw 19 and its function is to prevent the trolley from slipping off before mounting the module on the rails.

The module is connected with and removed from the guide rails by suitably unloosing and tightening the screws 16,18 (see Fig. 3).

Once the module has been connected with the rails and its position is adjusted through the screw 16, the bracket 4 is connected to the chain 7 through a pin 17 and then the support for the articles is fixed to the structure 2 through holes 10.

The operation of the transport device is evident to those skilled in the art and therefore is not described in detail herein.

Thus the invention fully achieves all the above-mentioned objects. In fact, the arrangement for transporting articles along a closed path defined by a guide, in accordance with the present invention, allows the elimination of the sliding friction on the rails at curved portions thereof through the use of the articulated trolleys and axis/wheel sliding friction through the use of antifriction bearings whereby it features a high transport speed, absence of vibrations and very low noiseness.

Moreover the transport module of the present invention features absence of unbalancings because of compensation of all involved forces and it results to be very stable being slidably constrained at at least three points, whereby it does not oscillate and can operate with any transversal inclination of the rails.

The module of the present invention further features low centrifugal forces in the curved sections of the path because of low centrifugal accelerations that such a system is capable of establishing.

Naturally several modifications and variants can be conceived which, being evident to those skilled in the art, fall within the sphere of the inventive concept.

For instance, the plate-like structure could be thought as disposed inside the path with bent ends 2a, 2b pointing outwards, or the structure could have a height smaller than the gauge with trolleys abutting on the rails from the inside (instead of from outside as shown in Fig. 3), the bearings can be roller bearings instead of ball-bearing and so on.

Lastly, materials and dimension can be varied according to production and use needs and circumstances, while complying with the characteristics illustrated, described and claimed below.

## Claims

1. Arrangement for transporting articles along a closed path of the type comprising a guide defining said path, at least one transport module (1) movable with roller friction on said guide, and means (4, 7, 8, 9, 17) for dragging said module along said path, characterized in that said guide is composed of at least two parallel tubular rails (5, 6) and said at least one module is slidably engaged with each of the rails through articulated trolleys (3) distributed in such a way that at least one rail is engaged with at least two articulated trolleys, each trolley being rotatable about an axis (y-y) perpendicular to the respective rail (6) and abuts on it through at least two antifriction bearings (13) touching it at at least a pair of points, each point being at an angular distance of 90° in the plane of the rail cross-section.

2. Arrangement according to claim 1, characterized in that said dragging means comprise a flexible driving member (9) anchored to said at least one module (1) and extending parallelly to said rails, and a motor (9) for moving said driving member.

3. Arrangement according to claim 2, characterized in that said driving member (7) is a chain.

4. Arrangement according to claim 1, characterized in that each of said articulated trolleys (3) comprises:
- a substantially cylindrical body (11) having an axis (y-y) perpendicular to the respective rail and terminating coaxially at one end with a hub (11a) insertable in a sintered self-lubricating bush (14) rigidly fixed to the structure of said module, and
- at least one pair of antifriction bearings (13) mounted on pins rigidly fixed into said cylindrical body (11) and each making an angle of 45° with said axis (y-y).

5. Constrained module (1) for transporting objects on a closed path, moved with rolling friction by dragging means (4, 7, 8, 9, 17) on a pair of parallel rails (5, 6) having tubular cross-section and defining said closed path, said module comprising:
- a plate-like structure (2) parallel to the strip delimited by the rails and extending transversely thereof and supporting the container for the transported objects, said plate-like structure having its ends (2a, 2b) bent perpendicularly to said strip, and
- at least three articulated trolleys (3) pivoted on said bent ends, alternately distributed thereon and extending inwards to abut on the respective rail and each touching it at two points located at an angular distance of 90° in the plane of the rail cross-section.

6. Constrained transport module for closed path according to claim 5, characterized in that each of said articulated trolleys comprises:
- a substantially cylindrical body (11) having an axis (y-y) perpendicular to the respective rail and terminating coaxially at one end with a hub (11a) inserted in a sintered self-lubricating bush (14) rigidly fixed on the respective bent portion of said plate-like structure, and
- at least one pair of antifriction bearings (13) mounted on pins rigidly fixed into said cylindrical body (11) and each making an angle of 45° with said axis.

7. Module according to claims 5 and 6, characterized in that at least one of said bent ends is composed by an unequal angle bracket (26) adjustably connected to said plate-like structure through an adjusting screw (16) and a plurality of securing screws (18).

8. Arrangement for transporting articles according to claims 1 to 4, characterized in that said parallel rails (5, 6) individuate vertical planes.

9. Arrangement for transporting articles along a closed path defined by a guide, as hereinbefore described and illustrated for the proposed objects.

## Patentansprüche

1. Enrichtung zum Transportieren von Gegenständen längs einer geschlossenen Bahn, mit einer die Bahn bildenden Führung, mit wenigstens einem Transportmodul (1), der mittels Rollreibung auf der Führung bewegbar ist, und mit Mitteln (4, 7, 8, 9, 17) zum Schleppen des Module längs der Bahn, **dadurch gekennzeichnet**, daß di Führung aus wenigstens zwei parallelen rohrförmigen Schienen (5, 6) aufgebaut ist und der wenigstens ein Modul mit jeder Schiene über Gelenkrollen (3) in gleitender Verbindung ist, die derart verteilt sind, daß wenigstens eine Schiene mit wenigstens zwei Gelenkrollen in Wirkverbindung ist, wobei jede Rolle un eine Achse (Y-Y) senkrecht zur betreffenden Schiene (6) drehbar ist und an ihr über mindestens zwei Wälzlager (13) anliegt, die sie an wenigstens einem Paar Punkte berühren, von denen jeder Punkt zum anderen in einem Winkel von 90^{º} in der Ebene des Schienenquerschnitts liegt.

2. Einrichtung nach Anspruch 1, dadurch gekennzeichnet, daß das Schleppmittel ein flexibles Antriebselement (9) das mit dem wenigstens einen Modul (1) fest verbunden ist und sich parallel zu den Schienen erstreckt, und einen Motor (9) zum Bewegen des Antriebselementes aufweist.

3. Einrichtung nach Anspruch 2, dadurch gekennzeichnet, daß das Antriebselement (7) eine Kette ist.

4. Einrichtung nach Anspruch 1, dadurch gekennzeichnet, daß jede Gelenkrolle folgendes aufweist:
einen im Wesentlichen zylindrischen Körper (11), mit einer Achse (Y-Y), die senkrecht zur betreffenden Schiene ist und an einem Ende in einer Nabe (11a) koaxial endet, die in eine gesinterte,
selbstschmierende Buchse (14) einsteckbar ist, die mit dem Aufbau das Moduls starr verbunden ist, und wenigstens ein Paar Wälzlager (13), die an Bolzen angeordnet sind, die in dem zylindrischen Körper (11) befestigt sind und von denen jedes einen Winkel von 45° mit der Achse (Y-Y) einschließt.

5. Einseitig gehaltenes Modul (1) zum Transportieren von Gegenständen auf einer geschlossenen Bahn, welches Modul mit Rollereibung durch Schleppmittel (4, 7, 8, 9, 17) auf einem Paar paralleler Schienen (5, 6) bewegbar ist, die rohrförmigen Querschnitt besitzen und eine geschlossene Bahn bilden, welches Modul folgendes aufweist:
einen plattenförmigen Aufbau (2), der parallel zu der Spur, die von den Schiengen begrenzt ist und sich quer hierzu erstreckt, angeordnet ist und der Behälter für die transportierten Gegenstände trägt, wobei die Enden (2a, 2b) des plattenförmigen Aufbaus senkrecht zur Spur umgebogen sind, und
wenigstens drei Gelenkrollen (3), die an den umgeborgenen Enden schwenkbar und abwachselnd verteilt angeordnet sind und sich nach ihnen erstrecken und so an der betreffenden Schiene anlegen, und von denen jede diese an zwei Punkten berührt, die zueinander in einem Winkel von 90° in der Ebene des Schienenquarschnitts angeordnet sind.

6. Einseitig gehaltenes Transportmodul für die geschlossene Bahn, nach Anspruch 5, dadurch gekennzeichnet, daß jede Gelenkrolle folgendes aufweist:
einen im Wasentlichen zylindrischen Körper (11), mit einer Aches (Y-Y), die senkrecht zur betreffenden Schiene angeordnet ist und an einem Ende in einer Nabe (11a) koaxial endet, die in eine gesinterte selbstschmierende Buchse (14) einsetzbar ist, die am betreffenden gebogenen Bereich das plattenförmigen Aufbaus starr befestigt ist, und
wenigstens ein Paar Wälzlager (13), die an Bolzen befestigt sind, die in dem zylindrischen körper (11) starr gehalten sind und von denen jeder in einem Winkel von 45° zur Achse liegt.

7. Modul nach den Ansprüchen 5 and 6, dadurch gekennzeichnet, daß an wenigstens einem der gebogenen Enden eine ungleichschenklige winkelklammer (2b) angeordnet ist, die mit dem plattenförmigen Aufbau über eine Stellschraube (16) und eine Vielzahl von befestigungschrauben (18) einstellbar verbunden, ist.

8. Einrichtung zum Transportieren von Gegenständen nach den Ansprüchen 1 bis 4, dadurch gekennzeichnet, daß die parallelen Schienen (5, 6) vertikale Ebenen bilden.

9. Einrichtung zum Transportieren von Gegenständen längs einer geschlossenen Bahn, die durch eine Führung definiert ist, wie hierin beschrieben und für die vorgeschlagenen Gegenstände dargestellt ist.

## Revendications

1. Installation destinée au transport d'articles le long d'une trajectoire fermée du type comprenant un guide définisant ladite trajectoire, au moins un module de transport (1) susceptible de se déplacer par l'intermédiaire de galets frollant contre ledit guide, et des moyans (4, 7, 8, 9, 17) destinés à entrainer ledit module le long de ladite trajectoire, caractérisé en ce que ledit guide est composé au moins de deux rails tubulaires (5, 6) parallèles, et en ce qu'au moins un module est en prise par coulissement avec chacun des rails par l'intermédiaire de chariots articulés (3), répartis de telle façon qu'au moins un rail est en prise avec au moins deux chariots articulés, chaque chariot étant susceptible de tourner autour d'un axe (y-y) perpendiculaire au rail (6) respectif et vient en butée contre celui-ci par l'intermédiaire d'au moins deux roulements (13) en contact avec celui-ci au niveau d'au moins une paire de points, chaque point se trouvant à une distance angulaire de 90° dans le plan de la section transversale du rail.

2. Installation selon la revendication 1, caractérisée en ce que lesdits moyens d'entraînement comprennent un organe d'entraînement souple (9) ancré sur ledit au moins un module (1) et s'étendant parallèlement auxdits rails, et un moteur (9) destiné à actionner ledit organe d'entraînement.

3. Installation selon la revendication 2, caractérisée en ce que ledit organe d'entraînement (/) est une chaîne.

4. Installation selon la revendication 1, caractérisée en ce que chacun desdits chariots articulés (3) comprend:
- un corps sensiblement cylindrique (11)ayant un axe (y-y) perpendiculaire au rail respectif et se terminant de manière coaxiale, au niveau d'une extrémité, par un moyeu (11a) susceptible d'être inséré dans une douille frillée (14) auto-lubrifiante, fixée de manière rigide sur la structure dudit module,
et
- au moins une paire de roulements (13) montés sur des axes fixés de manière rigide dans ledit corps cylindrique (11) et chacun formant un angle de 45° avec ledit axe (y-y).

5. Module (1) guidé, destiné au transport d'objets selon une trajectoire fermée, déplacé par frottement de roulement par des moyens d'entraînement (4, 7, 8, 9, 17) sur une paire de rails parallèles (5, 6) ayant une section transversale tubulaire et définissant ladite trajectoire fermée, ledit module comprenant:
- une structure en forme de plaque (2) parallèle à la piste délimitée par les rails et s'étendant de manière transversale par rapport à celle-ci et supportant le récipient contenant les objects transportés, ladite structure en forme de plaque ayant ses extrémités (2a, 2b) repliées de manière perpendiculaire par rapport à ladite piste, et
- au moins trois chariots articulés (3) montés pivotants sur lesdites extrémités repliées, répartis de manière alternée sur celles-ci et s'étendant vers l'intérieur pour venir en butée contre le rail respectif et chacun venant en contact avec celui-ci au niveau de deux points disposés à une distance angulaire de 90° dans le plan de la section transversale du rail.

6. Module de transport guidé pour trajectoire fermée selon la revendication 5, caractérisé en ce que chacun desdits chariots articulés comprend:
- un corps sensiblement cylindrique (11) ayant un axe (y-y) perpendiculaire au rail respectif et se terminant de manière coaxiale, au niveau d'une extrémité, par un moyeu (11a) susceptible d'être inséré dans une douille frittée (14) auto-lubrifiante, fixée de manière rigide sur la partie repliée respective de ladite structure en forme de plaque, et
- au moins une paire de roulements (13) montés sur des axes fixés de manière rigide dans ledit corps cylindrique (11) et chacun formant un angle de 45° avec ledit axe.

7. Module selon le revendications 5 et 6, caractérisé en ce qu'an moins une desdites extrémités repliées se présente sous la forme d'une console en cornière inégale (26) raccordée de manière réglable à ladite structure en forme de plaque par l'intermédiaire d'une vis de réglage (16) et d'une pluralité de vis de fixation (18).

8. Installation destinée au transport d'articles selon les revendications 1 à 4, caractérisée en ce que lesdits rails parallèles (5, 6) définissent des plans verticaux.

9. Installation destinée au transport d'articles le long d'une trajectoire fermée définie par un guide, telle que décrite et illustrée dans ce qui précède pour les objects proposés.
